(19) Europäisches Patentamt
European Patent Office
Office européen des brevets

(11) **EP 4 571 939 A1**

(12) **EUROPEAN PATENT APPLICATION**

(43) Date of publication:
**18.06.2025 Bulletin 2025/25**

(21) Application number: **23216654.6**

(22) Date of filing: **14.12.2023**

(51) International Patent Classification (IPC):
*H01M 10/613* (2014.01)   *H01M 10/6557* (2014.01)
*H01M 50/213* (2021.01)   *H01M 50/222* (2021.01)
*H01M 50/227* (2021.01)   *H01M 50/229* (2021.01)
*H01M 50/267* (2021.01)   *H01M 50/291* (2021.01)
*H01M 50/293* (2021.01)

(52) Cooperative Patent Classification (CPC):
H01M 50/213; H01M 10/613; H01M 10/6557;
H01M 50/222; H01M 50/227; H01M 50/229;
H01M 50/267; H01M 50/291; H01M 50/293

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Rimac Technology LLC
10431 Sveta Nedelja (HR)**

(72) Inventors:
• **Simic, Josip
  10315 Kriz (HR)**
• **Medic, Filip
  10104 Zagreb (HR)**
• **Kisic, Daniel
  10450 Jastrebarsko (HR)**

(74) Representative: **Hoffmann Eitle
Patent- und Rechtsanwälte PartmbB
Arabellastraße 30
81925 München (DE)**

(54) **HOLDER ARRANGEMENT**

(57)     The present invention provides a holder for holding battery cells, the holder comprising: a body having an upper surface, a lower surface, a first through opening and a second through opening, each of the first through opening and the second through opening extending between the upper surface and the lower surface and each being arranged to receive a battery cell, a first groove portion provided in the body at the periphery of the first through opening, and a second groove portion provided in the body at the periphery of the second through opening, wherein the first groove portion is provided in the body at a first position between the upper surface and the lower surface and the second groove portion is provided in the body at a second position between the upper surface and the lower surface, wherein the second position is different than the first position.

Figure 7

EP 4 571 939 A1

**Description**

TECHNICAL FIELD

The present invention relates to the field of battery modules comprising a plurality of battery cells and more particularly to the field of submerged battery modules and even more particularly to a holder for holding battery cells in a submerged battery module.

BACKGROUND

Batteries are playing an increasing role in energy storage for both mobility and grid storage applications. A battery normally comprises one or more battery modules, and each battery module normally comprises a plurality of battery cells densely packed within the available space in the battery module.

The temperature of the battery cells is critical for the performance of the battery cells, for example for the charge and discharge capacity of the battery cells. The temperature of the battery cells affects also the lifetime of the battery cells and accordingly the lifetime of the battery module.

During operation, the battery cells produce heat which needs to be properly rejected from the corresponding battery module, in order that a safe operation of the battery module is ensured.

Further, heating of the battery cells may be required in situations in which the temperature of the battery, influenced, for example, by the temperature of the surrounding environment of the battery, is disadvantageous for the operation of the battery. In such situations, it may be required that the battery is heated, at least up to a predetermined temperature, above which safe operation of the battery can be guaranteed before the battery is operated.

For this, the battery module is normally equipped with a system for heat exchange transfer. Such system for heat exchange transfer may be used for cooling of the battery cells or for heating of the battery cells.

In one such system for heat exchange transfer, a fluid is distributed in the battery module and the fluid is allowed to flow through the battery module with the battery cells at least partly submerged in the fluid. Such battery module equipped with such system for heat exchange transfer is also called a submerged battery module.

In a submerged battery module, a sealing of the battery cells is applied for preventing the fluid to leave the battery module at positions different than the outlet port. For sealing of the battery cells, different techniques are used. One technique involves using adhesives. However, the structural integrity of the adhesives is low and therefore adhesives have limited performance in comparison to other sealing techniques, for example sealing of the battery cells by way of using sealing members, for example, O-rings. Adhesives generally have higher rigidity than O-rings and are more prone to breaking during dimensional changes of the battery module parts due to humidity and temperature.

The battery module, following the demand for higher energy density which requires increase of the dimensions of the battery module, is fabricated of plastic parts to account for the increase in weight due to the increase in size. However, the plastic parts of the battery module suffer from structural instability making adhesives unfavourable for achieving effective sealing of the battery cells in the battery module.

O-rings, on the other hand, have better structural integrity than adhesives in that they are structurally stable, reliable and not prone to large deformation and failure. However, O-rings have rather large dimensions, and their use tends to increase the cell-to cell distance in the battery module. Increase of the cell-to-cell distance increases the size and the weight of the battery module and reduces the energy density of the battery module. Therefore, use of O-rings for sealing of battery cells in a submerged battery module is particularly challenging in battery modules with small cell-to-cell distance.

Accordingly, there is a need for an improved solution for sealing of battery cells in submerged battery modules.

SUMMARY

The mentioned problems and objects are met by the subject-matter of the independent claims. Advantageous embodiments are defined in the dependent claims.

In one aspect, the present invention provides a holder for holding battery cells, the holder comprising:

a body having an upper surface, a lower surface, a first through opening and a second through opening, each of the first through opening and the second through opening extending between the upper surface and the lower surface and each being arranged to receive a battery cell,

a first groove portion provided in the body at the periphery of the first through opening, and

a second groove portion provided in the body at the periphery of the second through opening,

wherein the first groove portion is provided in the body at a first position between the upper surface and the lower surface and the second groove portion is provided in the body at a second position between the upper surface and the lower surface, wherein the second position is different than the first position.

In another aspect, the present invention provides a battery module comprising the holder according to the previous aspect and a battery cell inserted in each one of the through openings.

BRIEF DESCRIPTION OF THE DRAWINGS

Embodiments of the present invention which are presented for better understanding the inventive concept of the present invention, but which are not to be seen as limiting the present invention, will now be described with reference to the figures in which:

Fig. 1    shows a schematic representation of a battery module according to an embodiment of the present invention;

Fig. 2    shows a schematic representation of battery cells arranged in the battery module according to an embodiment of the present invention;

Fig. 3    shows a schematic representation of a holder for holding battery cells according to an embodiment of the present invention.

Fig. 4    shows a schematic representation of the holder for holding battery cells according to an embodiment of the present invention.

Fig. 5    shows a schematic representation of the holder for holding battery cells according to an embodiment of the present invention.

Fig. 6    shows a schematic representation of a sealing member for the battery cells according to an embodiment of the present invention;

Fig. 7    shows a schematic representation of arrangement of sealing members in the holder according to an embodiment of the present invention;

Fig. 8    shows schematically arrangement of sealing members in one level and in two levels according to an embodiment of the present invention;

Fig. 9    shows schematically a compression of a sealing member under different temperature conditions;

Fig. 10   shows schematically a cross section of a holder with the sealing members arranged in three levels according to an embodiment of the present invention.

Fig. 11   shows schematically an exploded view of a holder according to an embodiment of the present invention.

Fig. 12   shows schematically a distribution pattern of sealing members in a holder according to an embodiment of the present invention;

DETAILED DESCRIPTION

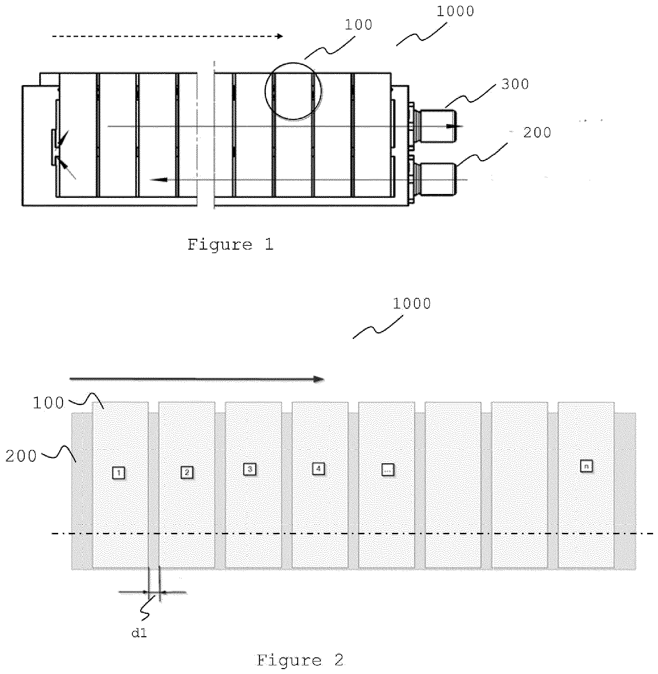

There is shown in figure 1 a schematic representation of a battery module 1000 (at least a part of it) according to an embodiment of the present invention. The battery module 1000 comprises a plurality of battery cells 100. The battery cells 100 are arranged at least along a first direction, represented with the dashed arrow in figure 1. The fluid is distributed in the battery module 1000 via at least one inlet member 200 arranged at one end side of the battery module 1000 and flows through the battery module 1000, for example in at least one flow channel, in the direction indicated with the arrow. The battery cells 100 are at least partly submerged in the fluid. At the other end side of the battery module 1000, opposite of the end side where the inlet port 200 is arranged, the fluid makes a turn (for example U-turn) and flows in the opposite direction towards the outlet port 300 as indicated with the arrow. At the outlet port 300, the fluid leaves the battery module 1000.
It is to be understood that the position of the inlet port 200, the outlet port 300 and the position in the battery module 1000 where the fluid makes a turn are purely optional. In addition, it is to be understood that the fluid does not need to make a turn in the battery module 1000. It is possible, for example, that the inlet port 200 is arranged at one end side of the battery module 1000 and the outlet port 300 is arranged at the opposite end side of the battery module 1000. In this exemplary arrangement, the fluid does not make a turn in the battery module 1000. Other arrangements are also possible. In addition, it is also conceivable that the battery module 1000 comprises more than one inlet port 200 and more than one outlet port 300.

There is shown in figure 2 a schematic representation of an environment for applying embodiments of the present invention. There are shown in figure 2 battery cells 100 arranged in the battery module 1000. The battery cells 100 are arranged in a medium 200 which may be a holder for holding the battery cells 100 or a part of a holder for holding the battery cells 100. The dashed dotted line serves to indicate that the battery cells 100 may be, along their length, at least partially inserted in the medium 200.

In figure 2 d1 denotes the cell-to-cell distance (inter cell distance). The cell-to-cell distance is determining the energy density of the battery module 1000. In other words, smaller cell-to cell d1 distance enables higher energy density since higher number of battery cells 100 may be packed in the battery module 1000. The medium 200 normally houses a plurality of sealing members for sealing each of the plurality of battery cells 100, so that the fluid leaves the battery module 1000 through the outlet port 300 only.

An example of a sealing member is an O-ring. An O-ring, also known as a packing or a toric joint, is a mechanical gasket in the shape of a torus. It is a loop of elastomeric material with a round cross-section, designed to be seated in a groove provided in the medium 200 and compressed when the battery cell 100 is inserted in the medium 200, forming a seal between the outer surface of the battery cell 100 and the medium 200.

O-rings have a favourable structural integrity which enables that sealing is preserved even with high dimensional changes of the battery module 1000 due to humidity and temperature that usually stress the sealing joints and cause sealing failure.

However, O-rings at least due to their size lead to increase of the cell-to-cell distance d1. The increase of the cell-to-cell distance d1 reduces the energy density of the battery module 1000 since less battery cells 100 may be packed within the battery module 1000.

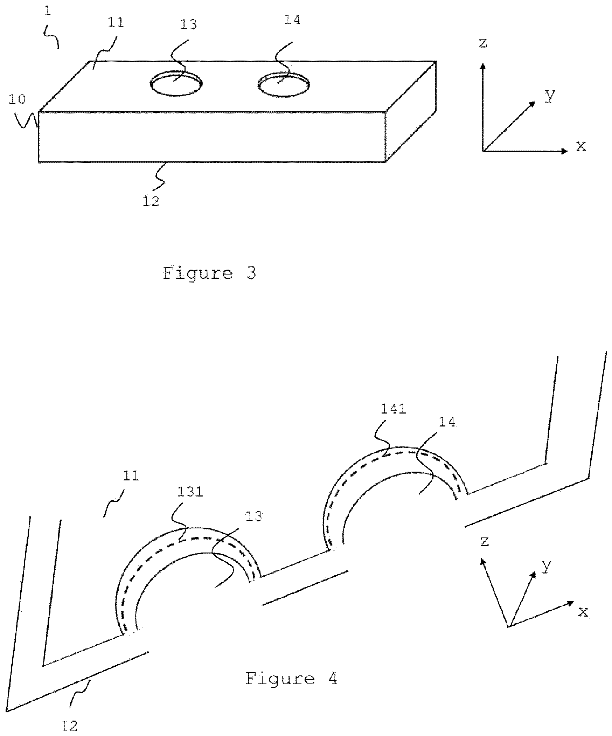

To account for this, the present invention proposes a cascaded arrangement of the sealing members. For this, the present invention proposes a holder for holding the battery cells. There is shown in figure 3 a schematic representation of the holder 1 for holding the battery cells 100 according to an embodiment of the present invention.

The holder 1 comprises a body 10 having an upper surface 11, a lower surface 12, a first through opening 13 and a second through opening 14.

The material of the body 10 may be a thermally insulating material. In addition, the material of the body 10 may be an electrically insulating material. The material of the body 10 being thermally insulating material enables that transfer of heat between the different battery cells inserted in the holder 1 is suppressed. In other words, the body 10 prevents thermal runaway propagation from one battery cell 100 to the surrounding battery cells 100. The body 10 being electrically insulating material enables that electrical short circuits between different battery cells 100 that may occur when, for example, a housing of a battery cell 100 is damaged, are suppressed. In this embodiment of the present invention the material of the body 10 is any one of a composite polymer, ceramic, mica, alumina, silicon and any blend of one or all. For example, the material of the body may be Polyamid 6 (PA 6) material.

The body 10 may further comprise one or more channels for flow of a fluid for heat exchange.

Each of the first through opening 13 and the second through opening 14 extends between the upper surface 11 and the lower surface 12 and each is arranged to receive a battery cell 100. In one or more embodiments of the present invention the first through opening 13 and the second through opening 14 may be adjacent to each other, however, this is not limiting. "Adjacent" is to be understood arranged at a predetermined distance between each other.

The holder 1 comprises a first groove portion 131 provided in the body 10 at the periphery of the first through opening 13, and a second groove portion 141 provided in the body 10 at the periphery of the second through opening 14. Each of the first groove portion 131 and the second groove portion 141 may be understood to represent a space cut out in the body 10 of the holder around the periphery of the respective one of the first through opening 13 and the second through opening 14.

The first groove portion 131 is provided in the body 10 at a first position between the upper surface 11 and the lower surface 12 and the second groove portion 141 is provided in the body 10 at a second position between the upper surface 11 and the lower surface 12.

The second position is different than the first position. In other words, assuming that the upper surface 11 and the lower surface 12 of the body 10 face each other along the z direction in figure 3, the first position and the second position are different positions along the z axis. Hence, the distance of the first groove portion 131 to the upper surface 11 and to the lower surface 12 is different than the distance of the second groove portion 141 to the upper surface 11 and to the lower surface 12.

Figure 4 shows schematically a cross section of the body 10 along the z-direction. Figure 4 shows the first groove portion 131 arranged at a first position between the upper surface 11 and the lower surface 12 and the second groove portion 141 arranged at a second position different than the first position between the upper surface 11 and the lower surface 12. In other words, there is shown in figure 4 that the first groove portion 131 is provided farther from the upper surface 11 than the second groove portion 141. The first groove portion 131 is provided closer to the lower surface 12 than the second groove portion 141.

In an embodiment of the present invention, a first member 15 is provided in the first groove portion 131 and a second member 16 is provided in the second groove portion 141.

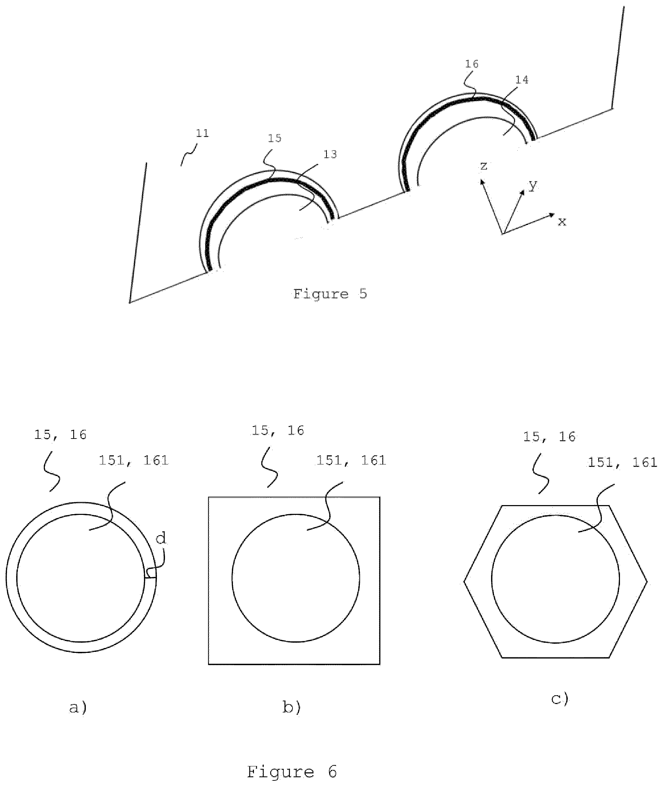

Figure 5 shows schematically a cross section of the body 10 along the z-direction. Figure 5 shows the first member 15 provided in the first groove portion 131 and the second member 16 provided in the second groove portion 141. Each of the first member 15 and the second member 16 is for sealing the corresponding battery cell 10 when inserted in the corresponding one of the first through opening 13 and the second through opening 14. Therefore, each of the first member 15 and the second member 16 is a first sealing member 15 and a second sealing member 16 respectively. In other words, each of the first member 15 and the second member 16 is configured to be compressed by the outer wall of the corresponding battery cell 100 when the corresponding battery cell 100 is inserted in the corresponding through opening 13, 14 and to remain in contact with the outer wall of the corresponding battery cell 100.

Hence, the first member 15 and the second member 16 are arranged in the body 10 of the holder 1 in two different positions (two different levels) with respect to the z-axis (the axis along which the upper surface 11 and the lower surface 12 face each other). Different levels of arrangement of the first sealing member 15 and second sealing member 16 allows for packing of sealing members 15, 16 with larger dimensions. Larger dimensions of the sealing members 15, 16 can compensate larger tolerances in the manufacturing of the respective sealing member 15, 16 and the respective one of the first groove portion 131 and the second groove portion 141. Larger dimensions of the sealing members 15, 16 can also compensate better the dimensional changes in the battery module 1000. As elaborated above, dimensional changes in the battery module 1000 may occur due to temperature changes in the battery module 1000, humidity absorption and loads in the battery module 1000 and the system in which the battery module 1000 is applied.

The material of each of the first member 15 and the second member 16 is a material that can be elastically deformed when a battery cell 100 is inserted in the corresponding through opening 13, 14. In embodiments of the present invention, the material of each of the first member and the second member is a polymer-based material with elastomeric properties.

Each of the first member 15 and the second member 16 has an inner cut-out 151, 161 arranged to receive the battery cell 100. In other words, the shape of the inner cut-out 151, 161 corresponds to the shape of the battery cell 100. Normally, the battery cells 100 have a cylindrical shape. The cylindrical shape has a circular cross-section. Therefore, for battery cells 100 with circular cross-section, the inner cut-out 151, 161 has a circular shape or substantially circular shape. The word "substantially" indicates minor deviations of the circular shape to account for, for example, manufacturing imperfections.

Each of the first member 15 and the second member 16 may have an outer shape that is the same as the shape of the inner cut-out 151, 161 but may also have a different shape.

Figure 6 shows shapes of the first member 15 and the second member 16 in embodiments of the present invention.

Figure 6a) shows an example in which the inner cut-out 151, 161 has a circular shape and the outer shape is also circular. Such first member 15 and second member 16 is also called an O-ring. Such outer shape of the first member 15 and second member 16 may facilitate the fabrication of each of the first groove portion 131 and the second groove portion 161.

The part of each of the first member 15 and the second member 16 between the inner cut-out and the outer periphery is the diameter of the cross-section d of the respective first member 15 and the second member 16.

Figure 6b) shows an example in which the inner cut-out 151, 161 has a circular shape and the outer shape is rectangular. Such outer shape of the first member 15 and the second member 16 may enhance the compression stability of each of the first member 15 and the second member 16 since the cross-section is increased.

Figure 6c) shows an example in which the inner cut-out 151, 161 has a circular shape and the outer shape is hexagonal.

With increase of the cross-section of each of the first member 15 and second member 16 with respect to the diameter of the inner cut-out 151, 161 (inner diameter), the first member 15 and the second member 16 become more stable and the assembly in the respective one of the first groove portion 131 and the second groove portion 141 is easier.

In one or more embodiments of the present invention, the holder 1 may further comprise a plurality of channels arranged to receive a fluid to be in direct contact with each of the battery cells 100 when inserted, an inlet port 200 for distributing the fluid into the channels and an outlet port 300 for distributing the fluid away from the channels.

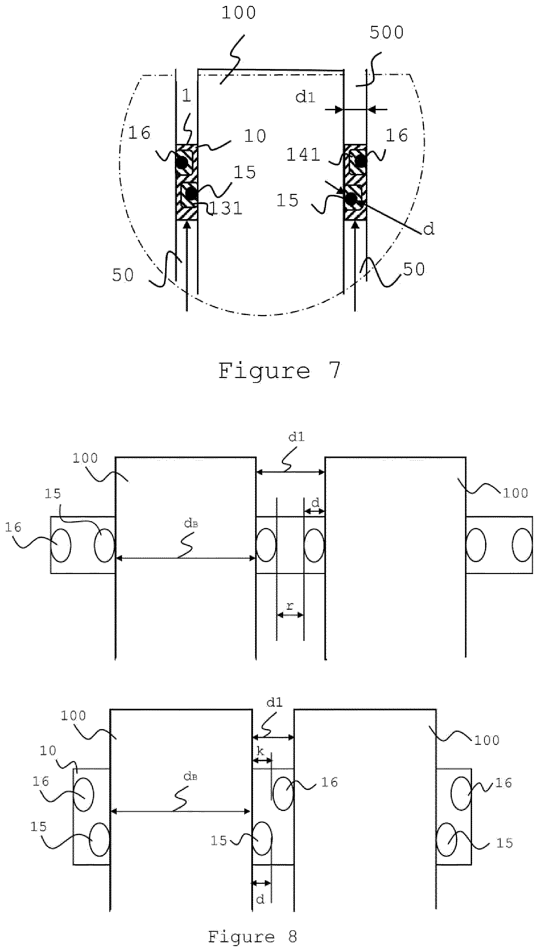

Figure 7 is a cross-sectional schematical view of a part of the holder 1 showing the arrangement of the first member 15 and the second member 16. d is the diameter of the cross-section of each of the first member 15 and second member 16 and is normally in the range of 1 mm with tolerance of ±0.05 mm. d1 is the cell-to-cell distance. The two arrows show the pressure of the fluid on the body 10 of the holder 1.

There is shown in figure 8 schematically the arrangement of the first member 15 and second member 16 in one level (upper portion of figure 8) and according to an embodiment of the present invention (lower portion of figure 8). The first member 15 and the second member 16 have a shape as shown in figure 6 a). In the arrangement in one level, the first member 15 and the second member 16 are arranged at the same position between the upper surface 11 and the lower surface 12. The distance between two neighbouring first member 15 and second member 16 r is 0.6 mm. The diameter of the cross-section of each of the first member and the second member is 0.7 mm. Accordingly, the cell-to-cell distance d1 is 2 mm.

In the arrangement according to the embodiment of the present invention, arranging the first member 15 in the first groove portion 141 provided at the first position and the second member 16 in the second groove portion 142 provided at the second position, the second position being different than the first position, with a diameter of the cross-section of the first member 15 and the second member 16 of 0.7 mm it is enabled that the distance k between the second member 16 and the battery cell 100 at the left side of the figure is reduced to 0.6 mm. This enables that the cell-to-cell distance d1 is reduced to 1.3 mm in comparison to the cell-to-cell distance d1 of 2 mm in the arrangement shown in the upper part of figure 8.

Assuming that a battery cell 100 has a diameter of cross-section of 21 mm in the embodiment of the present invention described above with the dimensions of the first member 15 and second member 16 as described with reference to figure 8 with 30 battery cells arranged along a row, the dimensions of the battery module 1000 can be reduced for 21 mm allowing for adding an additional row of battery cells 100. This increases the energy density of the battery module 1000.

The compression ratio of each of the first member 15 and the second member 16 is dependent on its cross-section and at least one of the outer diameter of the respective groove portion 131, 141 and the outer diameter of the battery cell $d_B$. Preferably the compression ratio is in the range of 5% to 40%. Further, the compression ratio may also depend on the product tolerances, for example, tolerances on the dimensions of the battery cells 100 and in particular tolerances on their diameter, or the actual dimensions of the respective groove portion 131, 141 in comparison to the ideal groove portion dimensions.

The outer diameter of the first member 15 may be the same with the outer diameter of the second member 16 or may be different.

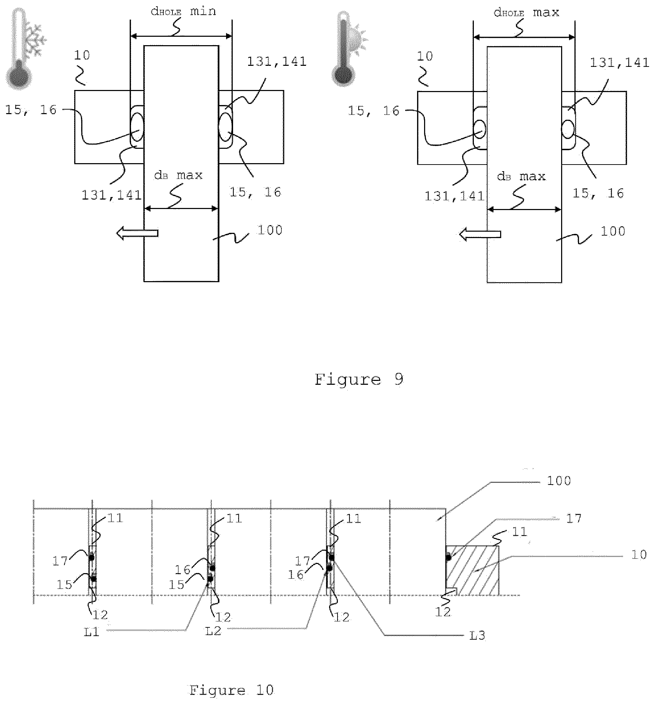

To explain the importance of the size of each of the first member 15 and the second member 16, calculations will be made in the following description. The dimensions used in the calculation are the ones used in reference to figure 8. The tolerance for the diameter d of the cross-section of each of the first member 15 and second member 16 is ± 0.05 mm. The diameter $d_B$ of the battery cell 100 is 21 mm with tolerance of ±0.1 mm. The operating temperature of Tmax = 70°C and Tmin = -40°C will be considered. These two operating temperatures are shown in figure 9 left panel and right panel respectively. For this calculation, the each of the first member 15 and second member 16 has the shape shown in figure 6 a).

Each of the first member 15 and the second member 16 will be compressed the most when the temperature is minimal (Tmin = - 40°C) and the respective groove portion 131, 141 is produced in minimal size, while the battery cell 100 and respective first member 15 and second member 16 have the largest size.

The compression ratio is calculated with the following equation:

$$\text{Compression ratio } = \frac{d_{hole(min)}(1-\alpha \cdot \Delta T_{neg})-d_{B(max)}}{2d_{(max)}} \qquad (1)$$

where,

$d_{hole(min)}$ = 22.4 mm - outer diameter of groove portion produced with the smallest dimensions according to tolerances for 1 mm cross-section of each of the first member 15 and second member 16;

$d_{hole(min)}$ = 21.75 mm - outer diameter of groove portion produced with the smallest dimensions according to tolerances for 0.5 mm cross-section of each of the first member 15 and second member 16;

$\alpha$ = 70 · $10^{-6}$ 1/K - coefficient of thermal expansion for material of the holder 1, in this calculation the material is PA6;

$\Delta T_{neg}$ **= 60 K** - temperature diference from room temperature to minimal operating temperature;

$d_B$ **= 21,004** mm - maximal diameter of the battery cell 100 according to tolerance;

$d_{(max)}$ = 1.03 mm - maximum diameter of the respective one of the first member and second member cross section for 1 mm cross-section of each of the first member 15 and second member 16;

$d_{(max)}$ = 0.53 mm - maximum diameter of the respective one of the first member and second member cross section for 0.5 mm cross-section of each of the first member 15 and second member 16;

Values for 1 mm cross-section of the respective one first member 15 and second member 16 max compression:

$$\text{Compression ratio} = 1 - \frac{22.4(1 - 70 \cdot 10^{-6} \cdot 60) - 21.004}{2 \cdot 1.03} = 40\%$$

Values for 0,5 mm cross-section of the respective one first member 15 and second member 16 max compression:

$$\text{Compression ratio} = 1 - \frac{21.75(1 - 70 \cdot 10^{-6} \cdot 60) - 21.004}{2 \cdot 0.53} = 62\%$$

On the other hand, each of the respective one first member 15 and second member 16 will be least compressed when the temperature is maximal (Tmax=70°C), the respective groove portion 131, 141 is produced with maximal dimension, the respective one first member 15 and second member 16 and the battery cell 100 are produced with smallest dimensions:

The compression ratio is calculated with the following equation:

$$\text{Compression ratio} = \frac{d_{hole(max)}\left(1 + \alpha \cdot \Delta T_{pos}\right) - d_{B(min)}}{2d_{(min)}}$$

$d_{hole(max)}$ = 22.6 mm - outer diameter of groove portion 131, 141 produced with the largest dimensions according to tolerances for 1 mm cross-section of each of the first member 15 and second member 16;

$d_{hole(max)}$ = 21.85 mm - outer diameter of groove portion 131, 141 produced with the largest dimensions according to tolerances for 0.5 mm cross-section of each of the first member 15 and second member 16;

$\alpha$ = 70 · **10$^{-6}$** 1/K - coefficient of thermal expansion for material of cell holder, in this calculation for material PA6;

**$\Delta T_{pos}$ = 50K** - temperature diference from room temperature to minimal operating temperature;

**$d_{B(min)}$ = 20.95** - maximal diameter of the battery cell according to tolerance;

$d_{(max)}$ = 0.97 - maximum diameter of cross-section of each of the first member 15 and second member 16 for 1 mm cross-section of each of the first member 15 and second member 16; $d_{(max)}$ = 0.47 - maximum diameter of cross-section of each of the first member 15 and second member 16 for 0.5 mm cross-section of each of the first member 15 and second member 16;

Values for 1 mm cross-section of the respective one first member 15 and second member 16 max compression:

$$\text{Compression ratio} = 1 - \frac{22.6(1 + 70 \cdot 10^{-6} \cdot 50) - 20.95}{2 \cdot 0.97} = 10\%$$

Values for 0.5 mm cross-section of the respective one first member 15 and second member 16 max compression:

$$\text{Compression ratio} = 1 - \frac{21.85(1 - 70 \cdot 10^{-6} \cdot 50) - 20.95}{2 \cdot 0.47} = -5\%$$

Moisture absorption and loads during exploitation may be expected to have the same effect on compression ratio of the respective one first member 15 and second member 16. For good sealing, the compression ratio should be in compression range specified by manufacturer. Usually this is somewhere between 5% and 40%. For this setup 0,5 mm cross-section of the respective one first member 15 and second member 16 is not in this rage which can compromise the respective one first member 15 and second member 16 function and lead to sealing failure.

In one or more embodiments of the present invention, the body 10 of the holder 1 may have a third through opening extending between the upper surface and the lower surface and being arranged to receive a battery cell 100. A third groove portion may be provided in the body 10 at the periphery of the third through opening at a third position between the first surface and the second surface. A third member 17 may be provided in the third groove position.

In one or more embodiments the third position may be equally close to the upper surface 11 and the lower surface 12 as one of the first position and the second position. In one or more other embodiments, the third position may be different than both of the first position and the second position.

Figure 10 shows the arrangement of the first member 15, the second member 16 and the third member 17 in one or more embodiments of the present invention in which the third position is different than the first position and the second position. It is shown therefore in figure 17 that each of the first member 15, second member 16 and third member 17 is arranged at a different distance from the upper surface 11 than the others of the first member 15, second member 16 and third member 17 in the respective groove portion. Hence, each of the first member 15, the second member 16 and the third member 17 is arranged at a different level (at a level L1, a level L2 and a level L3 respectively).

The use of three different levels L1, L2, L3 with respect to two different levels elaborated above enables that the packing density of battery cells 100 is even more increased since the cell-to-cell distance can be further reduced.

The third member 17 has an inner cut-out arranged to receive the battery cell. The elaborations above regarding the shape of the inner cut-out and the outer shape of each of the first member 15 and the second member 16 apply to the third member 17 as well. Accordingly, for cylindrical battery cells 100, the inner cut-out of the third member 17 has a circular shape. Similarly, the elaborations above regarding the material of each of the first member 15 and second member 16 apply to the third member 17 as well. Hence, in one or mor embodiments of the present invention, the material of the third member 17 is a polymer-based material.

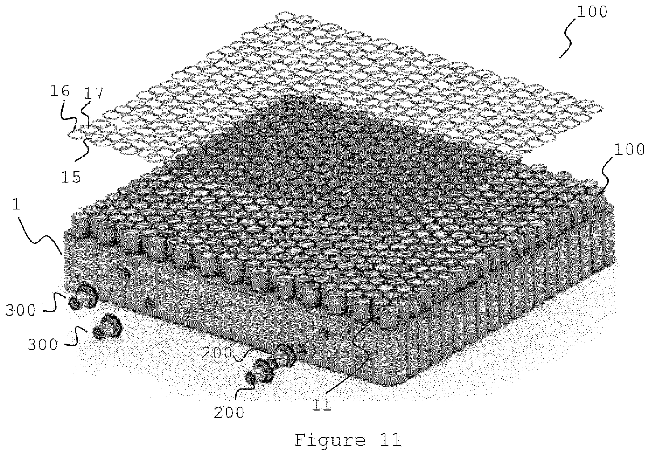

Figure 11 shows an exploded view of the battery module 1000 according to one or more embodiments of the present invention. It is shown in figure 11 that a first member 15, a second member 16 and a third member 17 are used for sealing the battery cells 100, arranged in three different levels. It is further shown that the holder 1 comprises two inlet ports 200 and two outlet ports 300.

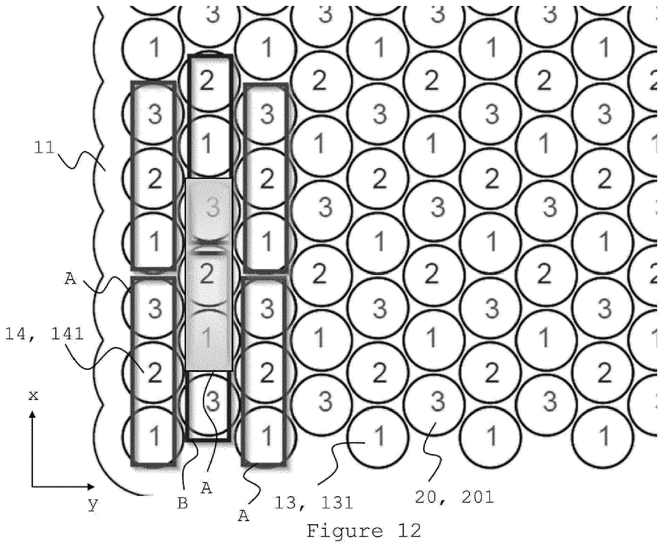

Figure 12 shows a distribution pattern of the first through opening 13, the second through opening 14 and the third through opening 20 each provided with the respective first groove portion 131, second groove portion 141 and third groove portion 201 for achieving the minimal cell to cell distance in the holder 1 and the minimal thickness of the holder 1 (the thickness of the holder is the thickness of the body 10 between the upper surface 11 and the lower surface 12).

For better visualisation of the distribution pattern, the different through openings 13, 14, 20 provided with the respective groove portions 131, 141, 201 are denoted as 1 (first through opening 13 and first groove portion 131), 2 (second through opening 14 and second groove portion 141) and 3 (third opening 20 and third groove portion 201). Hence, figure 12 shows a distribution pattern for arranging the first member 15, the second member 16 and the third member 17 in three different levels.

In the distribution pattern, the first through opening, the second through opening and the third through opening are arranged along a first direction (denoted with x in figure 9) and form a repetitive unit A of a distribution pattern of the first through opening, the second through opening and the third through opening. It is to be understood that the first through opening, the second through opening and the third through opening arranged along the first direction means that the first through opening with the first groove portion 131 provided at the periphery of the first through opening 13, the second through opening 14 with the second groove portion 141 provided at the periphery of the second through opening 14 and the third through opening 20 with the third groove portion 201 provided at the periphery of the third groove portion 20 are arranged along the first direction and form a repetitive unit A of the distribution pattern.

In the distribution pattern the repetitive unit A is replicated along the first direction. The repetitive unit A may also be replicated along a second direction. The second direction may be perpendicular to the first direction (y direction in figure 12).

In the distribution pattern, two repetitive units A that are consecutive in the second direction (see for example repetitive unit A in the outmost left side of the distribution pattern and the repetitive unit A denoted with grey filling) may be arranged to be shifted along the first direction. This equals to two adjacent repetitive units A and B, adjacent along the second direction being shifted along the first direction but with smaller shift than two repetitive units A.

In the distribution pattern, each one of the first through opening 1, the second through opening 2 and the third through opening 3 has the other ones of the first through opening 1, the second through opening 2 and the third through opening 3 as nearest neighbours through openings.

For example, in the second column in the bottom in figure 12 the first three through openings are denoted with 3, 1, 2 respectively. The through opening denoted with 1 has as nearest neighbours through openings only through openings denoted with 2 and 3. Similarly, the through opening denoted with 2 has as nearest neighbours through openings only through openings denoted with 1 and 3.

As elaborated above, this distribution pattern minimizes the cell-to-cell distance and the thickness of the holder 1.

In one or more embodiments of the present invention a battery module 1000 is provided. The battery module 1000 comprises at least one holder 1 as described above and a battery cell 100 inserted in each one of the through opening. In one or more embodiments of the present invention, the battery module 1000 may comprise, for example, two holders 1 as described above arranged to face each other with a battery cell 100 inserted in one through opening of the first holder and one through opening of the second holder. The fluid may flow between the two holders 1, with each battery cell 100 being partially immersed in the fluid.

In one or more embodiments of the present invention a method for fabricating a batter module 1000 is provided. The method comprises the steps: providing the holder 1 described above, inserting each of the first member 15 and the second member 16 in the respective one of the first groove portion 131 and second groove portion 141 and inserting a battery cell 100 in each of the first through opening 13 and second through opening 14.

In summary, the present invention proposes a holder provided with groove portions at different positions between the upper surface and the lower surface of the holder. The present invention proposes further arranging the respective sealing members in the respective groove portions and hence arranging the respective sealing members in at least two levels. Different levels allow for packing of sealing members with larger dimensions. Larger dimensions of the sealing member can compensate larger part tolerances and dimensional changes of the battery module. Also, with increase of the cross-section of the sealing member with regards to the diameter of the inner cut-out, the sealing members become more stable, and the assembly is easier.

Although detailed embodiments have been described, these only serve to provide a better understanding of the invention defined by the appended claims and are not to be seen as limiting.

**Claims**

1. A holder for holding battery cells, the holder comprising:

   a body having an upper surface, a lower surface, a first through opening and a second through opening, each of the first through opening and the second through opening extending between the upper surface and the lower surface and each being arranged to receive a battery cell,
   a first groove portion provided in the body at the periphery of the first through opening, and
   a second groove portion provided in the body at the periphery of the second through opening,
   wherein the first groove portion is provided in the body at a first position between the upper surface and the lower surface and the second groove portion is provided in the body at a second position between the upper surface and the lower surface, wherein the second position is different than the first position.

2. The holder according to claim 1,
   wherein a first member is provided in the first groove portion and a second member is provided in the second groove portion.

3. The holder according to claim 2,
   wherein each of the first member and the second member has an inner cut-out arranged to receive the battery cell, wherein, preferably, the inner cut-out has a circular shape.

4. The holder according to any one of claims 2 and 3, wherein the material of each of the first member and the second member is a polymer-based material.

5. The holder according to any one of claims 2 to 4, wherein each of the first member and the second member is configured to be compressed by the outer wall of the corresponding battery cell when inserted in the corresponding through opening and to remain in contact with the outer wall of the corresponding battery cell.

6. The holder according to claim 5, wherein the compression ratio of each of the first member and the second member is dependent on its cross-section and at least one of the outer diameter of the groove portion and the outer diameter of the battery cell, wherein preferably the compression ratio is in the range of 5% to 40%.

7. The holder according to any one of claims 2 to 6, wherein the outer diameter of the first member is different than the outer diameter of the second member.

8. The holder according to any one of claims 1 to 7, the body further having a third through opening extending between the upper surface and the lower surface and being arranged to receive a battery cell, wherein a third groove portion is provided in the body at the periphery of the third through opening at a third position between the first surface and the second surface.

9. The holder according to claim 8,
   wherein the third position is different than at least one of the first position and the second position.

10. The holder according to any one of claims 8 and 9, wherein a third member is provided in the third groove portion.

11. The holder according to claim 10, wherein the third member has an inner cut-out arranged to receive the battery cell, wherein, preferably, the inner cut-out has a circular shape, wherein, preferably, the material of the third member is a polymer-based material.

12. The holder according to any one of claims 8 to 11, wherein the first through opening, the second through opening and the third through opening are arranged along a first direction and form a repetitive unit of a distribution pattern of the first through opening, the second through opening and the third through opening.

13. The holder according to claim 12, wherein in the distribution pattern the repetitive unit is replicated along the first direction and/or along a second direction, wherein preferably the second direction is perpendicular to the first direction.

14. The holder according to claim 13, wherein in the distribution pattern two repetitive units that are consecutive in the second direction are arranged to be shifted along the first direction.

15. The holder according to any one of claims 12 to 14, wherein in the distribution pattern each one of the first through opening, the second through opening and the third through opening has the other ones of the first through opening, the second through opening and the third through opening as nearest neighbours through openings.

16. The holder according to any one of claims 1 to 15, further comprising a plurality of channels arranged to receive a fluid to be in direct contact with each of the battery cells when inserted, an inlet port for distributing the fluid into the channels and an outlet port for distributing the fluid away from the channels.

17. A battery module comprising the holder according to any one of claims 1 to 16 and a battery cell inserted in each one of the through openings.

Figure 1

Figure 2

Figure 3

Figure 4

Figure 5

a)                    b)                    c)

Figure 6

Figure 7

Figure 8

Figure 9

Figure 10

Figure 11

Figure 12

Europäisches
Patentamt

European
Patent Office

Office européen
des brevets

## EUROPEAN SEARCH REPORT

**Application Number**

EP 23 21 6654

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/138476 A1 (YAMAZAKI NOBUYUKI [JP] ET AL) 17 May 2018 (2018-05-17) | 1-6,8-17 | INV.<br>H01M10/613 |
| A | * paragraphs [0031], [0032], [0036], [0045] - [0059]; figures 1,2,4,6 * | 7 | H01M10/6557<br>H01M50/213<br>H01M50/222 |
| | ----- | | H01M50/227 |
| X | US 2023/068533 A1 (HIRANO TATSUYA [JP] ET AL) 2 March 2023 (2023-03-02) | 1-13,17 | H01M50/229 |
| A | * paragraphs [0030], [0052] - [0063]; figures 4,5A,6C,7B * | 14-16 | H01M50/267<br>H01M50/291 |
| | ----- | | H01M50/293 |
| A | US 2006/063067 A1 (KIM YONG-SAM [KR]) 23 March 2006 (2006-03-23) * the whole document * | 1-17 | |
| | ----- | | |

**TECHNICAL FIELDS SEARCHED    (IPC)**

H01M

The present search report has been drawn up for all claims

| Place of search | Date of completion of the search | Examiner |
|---|---|---|
| Munich | 17 May 2024 | Posch, Patrick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 6654

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2024

| Patent document cited in search report | Publication date | Patent family member(s) | | Publication date |
|---|---|---|---|---|
| US 2018138476 A1 | 17-05-2018 | CN | 108075074 A | 25-05-2018 |
| | | JP | 6583219 B2 | 02-10-2019 |
| | | JP | 2018081795 A | 24-05-2018 |
| | | US | 2018138476 A1 | 17-05-2018 |
| US 2023068533 A1 | 02-03-2023 | CN | 114830417 A | 29-07-2022 |
| | | JP | WO2021172465 A1 | 02-09-2021 |
| | | US | 2023068533 A1 | 02-03-2023 |
| | | WO | 2021172465 A1 | 02-09-2021 |
| US 2006063067 A1 | 23-03-2006 | CN | 1753205 A | 29-03-2006 |
| | | JP | 2006093144 A | 06-04-2006 |
| | | KR | 20060026601 A | 24-03-2006 |
| | | US | 2006063067 A1 | 23-03-2006 |

EPO FORM P0459

For more details about this annex : see Official Journal of the European Patent Office, No. 12/82